# EUROPEAN PATENT SPECIFICATION

(11) **EP 1 970 295 B1**
(45) Date of publication and mention of the grant of the patent: **07.06.2017**
(21) Application number: 08250884.7
(22) Date of filing: 14.03.2008
(51) Int. Cl.: B62H 5/04

(54) **Motorcycle locking mechanism**
Lenkersperre für ein Motorrad
Mécanisme de verrouillage pour motocyclette

(30) Priority: 16.03.2007 JP 2007068941; 21.12.2007 JP 2007329920
(43) Date of publication of application: 17.09.2008
(73) Proprietor: Yamaha Hatsudoki Kabushiki Kaisha, Shizuoka-ken Shizuoka 438-8501 (JP)
(72) Inventor: Yoshizawa, Akihiro c/o Yamaha Hatsudoki K.K., Iwata-shi Shizuoka-ken 438-8501 (JP)
(74) Representative: Moreland, David

(56) References cited:
- EP-A1- 1 541 788
- EP-A2- 1 081 032
- EP-A2- 1 245 442
- US-A1- 2004 090 306

## Description

### FIELD OF THE INVENTION

The invention relates to a motorcycle comprising a locking device arranged to lock and unlock rotation of a steering handle by operating an operation member.

### BACKGROUND TO THE INVENTION

Prior art document JP-A-2005-112048 discloses a steering handle lock device of a motorcycle which is an example of a conventional locking device arranged to lock and unlock a steering handle by operating an operation member. In such a conventional example, a panel in which meters are provided is arranged to be connected to a floor part through a vertical panel, and a handle lock is provided in the vertical panel.

The conventional handle lock device is provided in a vertical panel, so that the location is difficult to be seen by a rider sitting on a seat. This causes a problem that it is difficult to carry out an operation of pushing an operation knob, and thereby, operational performance in a locking operation is minimised.

EP1081032 describes a motorcycle having a body cover, the body cover comprising a cowling covering the vehicle body from the front of the steering shaft and a leg shield covering a rear side of a steering shaft. A plastic panel is mounted over an opening defined by a top edge of the cowling and a top edge of the leg shield, so as to close the opening. Near an upper edge of the leg shield and on the slightly right side of the centre thereof in a lateral direction is a main switch. On a left and right side of the main switch are left and right boxes respectively. Remote control operation cables of right and left seat locks extend forwardly from the sides of the container box along side pipes and are connected to the main switch after being assembled into one operation cable through a distributor with an automatic regulating mechanism. That is, when a main key is turned to a seat opening position while inserted in the main switch, the right and left seat locks are unlocked simultaneously.

An object of the invention is to provide a motorcycle capable of improving operational performance in a locking operation.

### SUMMARY OF THE INVENTION

According to an aspect of the present invention there is provided a motorcycle comprising:
a head pipe;
a steering handle capable of rotating with respect to the head pipe;
a footrest provided on a rear side of the head pipe;
a storage part having an opening and a lid adapted to selectively open and close said opening;
a leg shield provided on a rear side of the head pipe so as to cover a front side of the footrest, wherein the leg shield has an inclining wall part that is located above the lid and which inclines from a rear part thereof in the vicinity of the lid towards a front part thereof; and
a locking mechanism arranged to selectively lock and unlock rotation of the steering handle by an operation of an operation member, wherein the operation member is provided in the inclining wall part.

One advantage of the present invention is the provision of the operating member in the inclining wall part. In this case the inclining wall part inclines (i.e., rises upwardly), from a rear part in the vicinity of the lid to a front part. Thus, the operation member will be readily visible and accessible by a rider.

The inclining wall part defines an outwardly facing surface. In this the said surface is arranged to be directed generally upwardly and rearwardly of the motorcycle so as to generally face a rider.

The motorcycle may further comprise a front cover provided in front of the head pipe, wherein the storage part is provided between the front cover and the leg shield.

The inclining wall part may incline at a smaller angle relative to a horizontal plane than the vicinity of the lid.

The operation member may comprise a moveable button provided in the inclining wall, and the configuration and appearance of the button may be different in accordance with whether the steering handle is locked or unlocked.

The button may be adapted to be pushed to achieve a locking state. The button may project further from the inclining wall part when in the unlocking state than when in the locking state.

The operation member may be arranged on one side with respect to a vehicle center line extending in a back-and-forth direction of a vehicle.

The operation member may provided under the steering handle.

Operation of the operation member may be arranged to be ineffective when a main power supply is on. Operation of the operation member may be arranged to be effective when the main power supply is off.

The storage part may be provided in plural numbers in parallel in a vehicle width direction while an upper end of the lid may be provided in the vicinity of a lower end of the inclining wall part.

The motorcycle may further comprise a main switch for turning on the main power supply, wherein the main switch is provided in the inclining wall part.

The steering handle may be changed or reconfigured from a locking state to an unlocking state when the main switch is turned on by means of the main switch.

The main switch may be provided on a vehicle center line extending in the back-and-forth direction of the vehicle.

According to another aspect of the present invention there is provided a motorcycle comprising: a head pipe; a steering handle capable of rotating with respect to the head pipe; a low footrest part provided on a rear side of the head pipe; a front cover provided in front of the heat pipe; a leg shield provided on a rear side of the head pipe so as to cover a front side of the footrest; a storage part provided between the front cover and the leg shield; a lid provided in an opening formed so as to face to the storage part of the leg shield for covering the storage part so that the storage part can be opened and closed; and a lock mechanism arranged to lock and unlock rotation of the steering handle by an operation of an operation member, wherein the leg shield has an inclining wall part that is located above the lid and inclining at a smaller angle with a horizontal surface than the vicinity of the lid so that the front part would rise and the operation member is provided in the inclining wall part.

In accordance with the motorcycle according to the invention, an operation member of a locking mechanism is provided in an inclining wall part of a leg shield, the inclining wall part inclining at a smaller angle with a horizontal surface than the vicinity of a lid so that the front part would rise, that is, on the obliquely lower and front side in view from a rider sitting on a seat. Accordingly, performance of recognition by observation by the rider is excellent. This allows the locking operation to be easily performed, so that the operational performance can be improved.

### BRIEF DESCRIPTION OF THE DRAWINGS

These and other aspects of the present invention will now be described, by way of example only, with reference to the accompanying drawings, in which:
Fig. 1 is a right side view of a motorcycle in accordance with an embodiment of the invention;
Fig. 2 is a rear view of a steering handle and the periphery thereof in accordance with the embodiment;
Fig. 3 is a simplified view showing a relation between a steering handle lock button and a steering handle in accordance with the embodiment;
Fig. 4 is a front view of a steering handle lock device in accordance with the embodiment; and
Fig. 5 is a side view of the steering handle lock device.

### DETAILED DESCRIPTION OF THE DRAWINGS

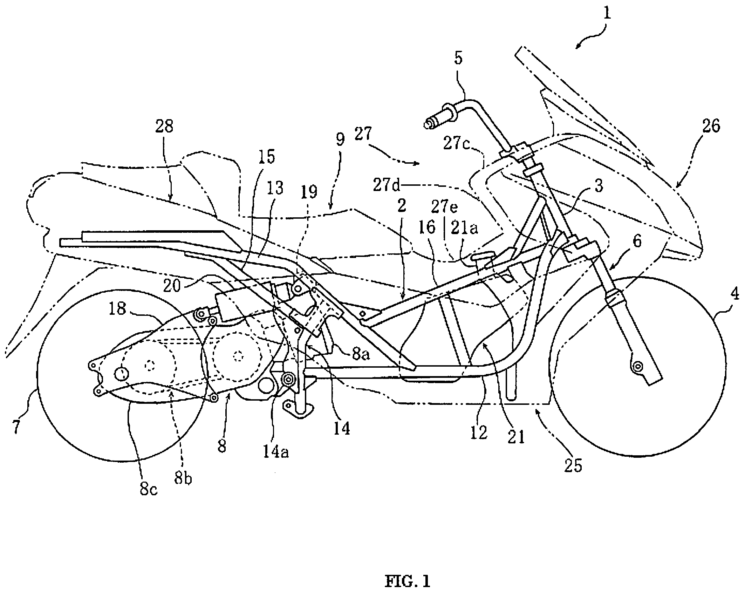

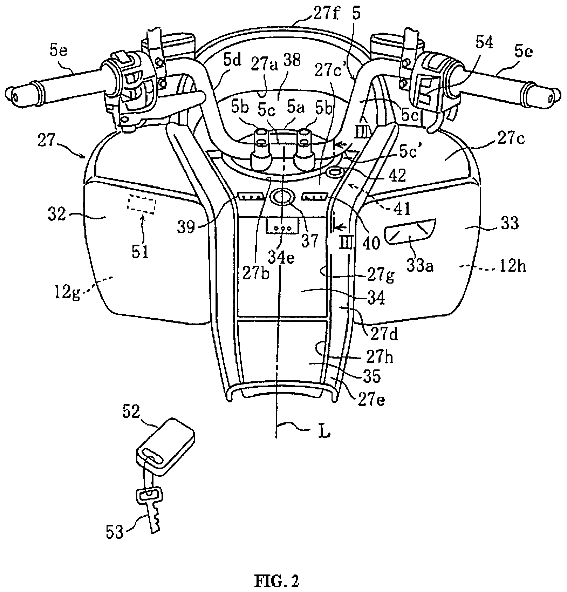

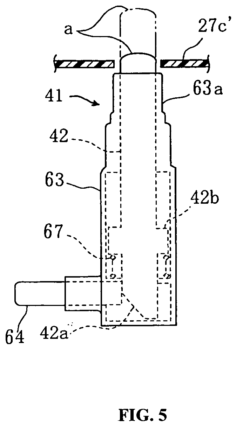

Figs. 1 to 5 illustrate a motorcycle in accordance with an embodiment of the invention. In the description of the embodiment, a back-and-forth direction and a right-and-left direction mean those in view of a rider sitting on a seat.

In the drawings, 1 denotes a scooter type motorcycle. The motorcycle 1 includes a body frame 2, a front fork 6, which is pivotally supported on a head pipe 3 provided at a front end of the body frame 2 and which is provided with a front wheel 4 in a lower end part and a steering handle 5 in an upper end part, respectively, a unit swing type engine unit 8 supported on the body frame 2 so as to be swingable in the vertical direction and provided with a rear wheel 7 at a rear end part, and a straddle-type seat 9 provided above and on the rear side of the body frame 2.

The body frame 2 includes right and left down tubes 12, which open in the vehicle width direction and extend from the head pipe 3 downward toward the rear side to extend substantially horizontally toward the rear side from the lower end. The body 2 also includes right and left seat rails 13 extending from respective middle parts of the right and left down tubes 12 obliquely upward toward the rear side. The body 2 further includes right and left engine suspension members 14, which extend in the vertical direction from respective rear end surfaces of the right and left down tubes 12 and whose upper end parts are connected to respective seat rails 13.

The body frame 2 further includes right and left seat stays 15, which are bridged over the right and left engine suspension members 14 and the seat rails 13 to be connected, and right and left upper tubes 16, which extend obliquely downward toward the rear side from respective connection parts of the right and left down tubes 12 of the head pipe 3 and which are connected to the seat rails 13.

The engine unit 8 is mounted so that a cylinder axis is arranged in a substantially horizontal direction. The engine unit 8 has a structure that an engine body 8a is coupled with a transmission case 8c in which a V-belt type continuously variable transmission 8b is housed. The engine unit 8 is supported so as to be swingable in the vertical direction through a pivot shaft member 14a provided in the right and left engine suspension members 14.

A swing arm 18 is provided on the right side of the engine unit 8 with respect to the rear wheel 7. A front end part of the swing arm 18 is connected to the engine unit 8 while a rear end part is connected to the rear wheel 7. The swing arm 18 is connected to a cross pipe 19 for connecting the right and left seat rails 13 by means of a rear suspension 20 provided substantially horizontally in the back-and-forth direction.

A fuel tank 21 is provided in a space enclosed by the right and left down tubes 12 and the right and left upper tubes 16. On an upper wall part of the fuel tank 21, there is formed a fuel filling port 21a which extends upward.

The motorcycle 1 in accordance with the embodiment described includes a body cover 25 provided so as to enclose the body frame 2. The body cover 25 includes a front cover 26 for covering the front side of the head pipe 3, a leg shield 27 provided behind the head pipe 3 for covering the front side of a rider's legs and a side cover 28 for covering a lower peripheral part of the seat 9.

The leg shield 27 has an inclining wall part 27c inclining so that the rearward side is lower than the forward side, relative to the back-and-forth direction of the motorcycle 1. The leg shield 27 also includes a longitudinal wall part 27d extending downward from a rear edge of the inclining wall part 27c and a channel-shaped stride part 27e extending rearward from a lower edge of the longitudinal wall part 27d for covering an upper part and right and left sides of the fuel tank 21. The stride part 27e is generally concave in the back-and-forth direction of the motorcycle 1 so as to be located at a position lower than the seat 9 to permit the stride part 27e to be easily straddled by a rider when mounting and dismounting the motorcycle 1. Further, at a front edge of the inclining wall part 27c there is formed a peak part 27f extending upward for covering the front side of a meter unit 38.

In the above structure, a part of the leg shield 27 in the vicinity of right and left lids 32 and 33 mentioned later rises substantially vertically while the inclining wall part 27c inclines at a smaller angle with a horizontal surface than the vicinity of the lid so that the front part thereof would rise. Accordingly, the inclining wall part 27c is arranged so as to be located on an obliquely lower and front side in view from a rider sitting on a seat and to make a substantially right angle with a rider's eyes toward the obliquely lower and front side.

At a center part 27c' of the inclining wall part 27c, are formed a meter mounting hole 27a for mounting the meter unit 38 and a bracket hole 27b for providing a steering handle bracket 5a. The steering handle bracket 5a is fixed to an upper end of the front fork 6. A center part 5c of the steering handle 5 is fixed to the steering handle bracket 5a via steering handle clamps 5b. The steering handle 5 has the center part 5c, a rising part 5d connected to the center part 5c and a grip part 5e connected to the rising part 5d to extend substantially horizontally again.

On the right and left outer sides of the longitudinal wall part 27d of the leg shield 27, right and left housing concave parts 12g and 12h are formed so as to expand forward. The right and left housing concave parts 12g and 12h are provided in parallel in the vehicle width direction and covered with the right and left lids 32 and 33, respectively, so as to be able to open and close.

Moreover, in the longitudinal wall part 27d, a trunk concave part 27g is formed with a size extending over the substantially whole area of the longitudinal wall part 27d so as to expand forward. An opening of the trunk concave part 27g is covered with a trunk lid 34 so as to be able to open and close. A lower edge of the trunk lid 34 is pivotally supported on a hinge pin. The trunk lid 34 is arranged to be able to engage with the inclining wall part 27c through a knob 34e of an engaging mechanism provided at an upper edge part. Rotating the trunk lid 34 to a closed position causes automatic engagement while pushing the knob 34e allows the engagement to be released.

A rectangular opening 27h is formed in a part of the stride part 27e, the part facing the fuel filling port 21a of the fuel tank. A fuel lid 35 is provided in the opening 27h. The fuel lid 35 is arranged to be capable of locking by means of a fuel lid locking mechanism.

Rotating the fuel lid 35 to a closed position causes automatic locking. Turning on a solenoid for unlocking causes the locking to be released, so that the fuel lid 35 rises a little by means of an urging spring.

Under a right edge of the handle insertion hole 27b of the inclining wall part 27c, there is provided a steering handle lock mechanism 41. The steering handle lock mechanism 41 comprises a casing 63, a bar-shaped steering handle lock button 42 provided in the casing 63 so as to be able to be pushed in and out in the vertical direction from a guide part 63a of the casing 63, a lock pin 64 driven by the steering handle lock button 42 to project from the casing 63, a slider 65 for fixing the steering handle lock button 42 in a locking position and a cam mechanism 66 for limiting a sliding state of the slider 65.

The steering handle lock button 42 is urged in a locking direction (upward) by means of a spring 67. Pushing in the steering handle lock button 42 to the locking position causes an inclination cam surface 42a formed at a lower end thereof to let the lock pin 64 project in the locking direction from the casing 63. The lock pin 64 is urged in an unlocking direction by means of a spring.

The cam mechanism 66 comprises an eccentric cam 66a and a motor 66b for rotating the eccentric cam 66a. Rotation of the motor 66b causes the eccentric cam 66a to move the slider 65 to a position allowing or forbidding the steering handle lock button 42 to be pushed in.

The steering handle lock button 42 is located under a corner part 5c' between the center part 5c and the right rising part 5d of the steering handle 5. The location hides a little behind the corner part 5c' and is difficult to be seen while it is relatively easily seen when the steering handle 5 is rotated leftward, in view from an upper side in riding.

In the case of locking the steering handle 5, the steering handle 5 is rotated toward any of the right or left, leftward in the embodiment. The steering handle lock button 42 is then no longer covered by the corner part 5c' of the steering handle 5, so that it becomes easy to operate the steering handle lock button 42 from the outer side. Pushing in the steering handle lock button 42 under the above condition causes the inclination cam surface 42a of the steering handle lock button 42 to let the lock pin 64 to project outward from the casing 63, so that the lock pin 64 is engaged with a lock hole on a front fork side. Engagement of the slider 65 with a flange part 42b of the steering handle lock button 42 causes fixing in the locking position, and thereby, the steering handle 5 is locked in an angle position of the rotation.

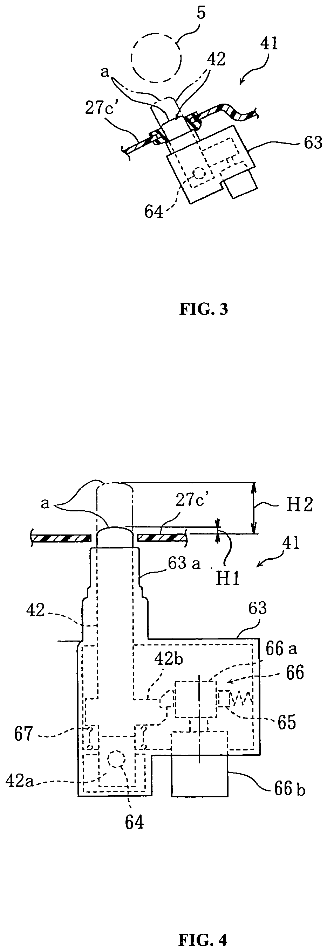

On the other hand, in the case of releasing locking of the steering handle, the motor 66b rotates the eccentric cam 66a to move the slider 65 rightward in Fig. 4. This causes the engagement with the steering handle lock button 42 to be released, so that the steering handle lock button 42 moves upward to a locking releasing position by means of a return spring 47.

In a steering handle locking state (a state shown by solid lines in Figs. 3 to 5), an upper end surface "a" of the steering handle lock button 42 slightly projects from an upper surface of a center part 27c' of the inclining wall part 27c of the leg shield 27 by H1, so that the upper end surface "a" of the steering handle lock button 42 is substantially the same in height as the upper surface of the center part 27c'. On the other hand, the upper end surface "a" largely projects from the upper surface of the center part 27c' by H2 under the lock releasing state (a state shown by double-dotted lines in the drawings). Such a large difference in size of the projection allows discrimination between locking and unlocking states to be easily carried out.

In a part on a vehicle center line L and on the rear side of the steering handle insertion hole 27b in the center inclining wall part 27c', a main switch 37 is provided. A left switch 39 and a right switch 40 are provided on the left and right sides of the main switch 37, respectively.

The motorcycle 1 in accordance with the embodiment comprises a smart key system. In the smart key system, an ID inquiry whether an ID signal from a mobile transmitter 52 carried by a rider accords with a pre-registered ID code or not is started when the rider pushes the main switch 37. In the case of accordance, a main power supply is turned on. Pushing a starter button 54 provided in the grip part 5e of the steering handle 5 in this state causes the engine to start.

Pushing the right switch 40 provided in the center part 27c' of the inclining wall part 27c for comparatively long time (one second or more, for example) causes locking of the fuel lid 35 to be released, so that fueling can be performed.

On the other hand, pushing the right switch 40 for comparatively short time (less than one second, for example) causes locking of the seat 9 to be released. Further, pushing the left switch 39 causes locking of the left lid 32 to be released.

In the embodiment, the motor 66b causes the eccentric cam 66a to rotate to the unlocking position where the slider 65 moves back, just after the main power supply turns on. This causes engagement between the slider 65 and the steering handle lock button 42 to be released, so that the steering handle lock button 42 projects upward from the inclining wall part 27c to achieve the unlocking state. The eccentric cam 66a rotates to a position where the slider 65 cannot move after extremely short predetermined time has passed from a point of time turning on the power supply. This disables the steering handle lock button 42 from being pushed in, that is, a pushing-in operation is made ineffective, so that the handle 5 is not locked. On the other hand, the motor 66b rotates the eccentric cam 66a to a position capable of locking under a condition that the main power supply is off. This allows the steering handle lock button 42 to be pushed in, that is, a pushing-in operation is made effective. Pushing in the steering handle lock button 42 causes the lock pin 66 to project to lock the steering handle as well as causing the steering handle lock button 42 to be engaged with the slider 65 to be fixed in the pushed-in position.

In the embodiment, it is arranged that the upper end surface "a" of the steering handle lock button 42 of the steering handle lock device 41 be located substantially the same in height as the upper surface of the center part 27c' of the leg shield 27 under the locking state while the upper end surface "a" largely project upward from the center part 27c' under the unlocking state. This allows judgment whether the steering handle 5 is in the locking state or the unlocking state to be easily and certainly carried out.

Moreover, the main switch 37 is arranged in the vehicle center line L while the steering handle lock button 42 is arranged to be located toward one side, the right side in the embodiment, with respect to the vehicle center line L. This allows a space for arranging the main switch 37, the steering handle lock button 42, and thereby, the steering handle lock mechanism 41 to be easily secured. Moreover, interference with other components is difficult to occur in carrying out a locking operation, so that operational performance is excellent.

Further, the steering handle lock button 42 is arranged under the corner part 5c' of the steering handle 5, so that the steering handle lock button 42 is located at a position difficult to be seen when the running steering handle 5 is faced forward as in running. The steering handle lock button 42 is also disabled to be pushed in during the main power supply is on. Accordingly, problems can be prevented in the lock button being pushed in by error in running.

In addition, arranging the lock button 42 in the inclining wall part 27c of the leg shield 27, namely, in a location easily seen by a rider sitting on a seat in looking the obliquely lower and front side allows a locking operation to be certainly easily carried out and operational performance in the locking operation to be improved. Furthermore, the main switch 37 is provided in the inclining wall part 27c, so that the main switch 37 can be improved in operational performance.

### Description of the Reference Numerals and Signs

- 1:: MOTORCYCLE
- 5:: STEERING HANDLE
- 27:: LEG SHIELD
- 27c:: INCLINING WALL PART
- 41:: STEERING HANDLE LOCK DEVICE (LOCKING DEVICE)
- 42:: STEERING HANDLE LOCK BUTTON (OPERATION MEMBER)
- H1:: QUANTITY OF PROJECTION FROM VEHICLE BODY IN LOCKING STATE
- H2:: QUANTITY OF PROJECTION IN UNLOCKING STATE
- L:: VEHICLE CENTER LINE

## Claims

1. A motorcycle (1) comprising:
a head pipe (3);
a steering handle (5) capable of rotating with respect to the head pipe (3);
a footrest provided on a rear side of the head pipe (3) ;
a storage part having an opening and a lid (32) adapted to selectively open and close said opening;
a leg shield (27) provided on a rear side of the head pipe (3), wherein the leg shield (27) has an inclining wall part (27c) that is located above the lid (32) and which inclines from a rear part thereof in the vicinity of the lid (32) towards a front part thereof; and
a locking mechanism (41) arranged to selectively lock and unlock rotation of the steering handle (5) by an operation of an operation member (42), wherein the operation member (42) is provided in the inclining wall part (27c).

2. The motorcycle (1) according to Claim 1, further comprising a front cover (26) provided in front of the head pipe (3), wherein the storage part is provided between the front cover (26) and the leg shield (27).

3. The motorcycle (1) according to Claim 1 or 2, wherein the inclining wall part (27c) inclines at a smaller angle relative to a horizontal plane than the vicinity of the lid (32).

4. The motorcycle (1) according to any preceding Claim, wherein the operation member (42) comprises a moveable button provided in the inclining wall part (27c), and the configuration and appearance of the button is different in accordance with whether the steering handle (5) is locked or unlocked.

5. The motorcycle (1) according to Claim 4, wherein the button is adapted to be pushed to achieve a locking state.

6. The motorcycle (1) according to Claim 4 or 5, wherein the button projects further from the inclining wall part (27c) when in the unlocking state than when in the locking state.

7. The motorcycle (1) according to any preceding Claim, wherein the operation member (42) is arranged on one side with respect to a vehicle center line L extending in a back-and-forth direction of a vehicle (1).

8. The motorcycle (1) according to any preceding Claim, wherein the operation member (42) is provided under the steering handle (5).

9. The motorcycle (1) according to any preceding Claim, wherein operation of the operation member (42) is arranged to be ineffective when a main power supply is on.

10. The motorcycle (1) according to any preceding Claim, wherein operation of the operation member (42) is arranged to be effective when the main power supply is off.

11. The motorcycle (1) according to any preceding Claim, wherein the storage part is provided in plural numbers in parallel in a vehicle width direction while an upper end of the lid (32) is provided in the vicinity of a lower end of the inclining wall part (27c).

12. The motorcycle (1) according to any preceding Claim, further comprising a main switch (37) for turning on the main power supply, wherein the main switch (37) is provided in the inclining wall part (27c).

13. The motorcycle (1) according to Claim 12, wherein the steering handle (5) is changed from a locking state to an unlocking state when the main switch (37) is turned on.

14. The motorcycle (1) according to Claim 12 or 13, wherein the main switch (37) is provided on a vehicle center line (L) extending in the back-and-forth direction of the vehicle.

15. The motorcycle (1) according to claim 1, wherein
the footrest comprises a low footrest part;
the motorcycle comprises a front cover (26) provided in front of the head pipe (3);
the leg shield (27) is arranged so as to cover a front side of the footrest;
the storage part is provided between the front cover (26) and the leg shield (27);
the lid (32) is formed so as to face to the storage part of the leg shield (27) for covering the storage part; and
wherein the inclining wall part (27c) inclines at a smaller angle with a horizontal surface than the vicinity of the lid (32) so that the front part would rise.

## Patentansprüche

1. Motorrad (1), das Folgendes umfasst:
ein Steuerrohr (3),
einen Lenkgriff (5), der dazu in der Lage ist, sich in Bezug auf das Steuerrohr (3) zu drehen,
eine Fußraste, die auf einer hinteren Seite des Steuerrohrs (3) bereitgestellt wird,
einen Aufbewahrungsteil, der eine Öffnung und einen Deckel (32), der dafür eingerichtet ist, die Öffnung selektiv zu öffnen und zu schließen, hat,
einen Beinschutz (27), der auf einer hinteren Seite des Steuerrohrs (3) bereitgestellt wird, wobei der Beinschutz (27) einen sich neigenden Wandteil (27c) hat, der oberhalb des Deckels (32) angeordnet ist und der sich von einem hinteren Teil desselben in der Nachbarschaft des Deckels (32) zu einem vorderen Teil desselben hin neigt, und
einen Sperrmechanismus (41), der dafür angeordnet ist, selektiv eine Drehung des Lenkgriffs (5) durch eine Betätigung eines Betätigungselements (42) zu sperren und zu entsperren, wobei das Betätigungselement (42) in dem sich neigenden Wandteil (27c) bereitgestellt wird.

2. Motorrad (1) nach Anspruch 1, das ferner eine Frontverkleidung (26) umfasst, die vor dem Steuerrohr (3) bereitgestellt wird, wobei der Aufbewahrungsteil zwischen der Frontverkleidung (26) und dem Beinschutz (27) bereitgestellt wird.

3. Motorrad (1) nach Anspruch 1 oder 2, wobei sich der sich neigende Wandteil (27c) in einem kleineren Winkel im Verhältnis zu einer horizontalen Ebene neigt als die Nachbarschaft des Deckels (32).

4. Motorrad (1) nach einem der vorhergehenden Ansprüche, wobei das Betätigungselement (42) einen beweglichen Knopf umfasst, der in dem sich neigenden Wandteil (27c) bereitgestellt wird, und die Konfiguration und Erscheinung des Knopfes unterschiedlich sind in Einklang damit, ob der Lenkgriff (5) gesperrt oder entsperrt ist.

5. Motorrad (1) nach Anspruch 4, wobei der Knopf dafür eingerichtet ist, gedrückt zu werden, um einen sperrenden Zustand zu erreichen.

6. Motorrad (1) nach Anspruch 4 oder 5, wobei der Knopf weiter von dem sich neigenden Wandteil (27c) vorspringt, wenn er sich in dem entsperrenden Zustand als wenn er sich in dem sperrenden Zustand befindet.

7. Motorrad (1) nach einem der vorhergehenden Ansprüche, wobei das Betätigungselement (42) auf einer Seite in Bezug auf eine Fahrzeugmittellinie L angeordnet ist, die sich in einer Vor-und-Rückwärts-Richtung eines Fahrzeugs (1) erstreckt.

8. Motorrad (1) nach einem der vorhergehenden Ansprüche, wobei das Betätigungselement (42) unter dem Lenkgriff (5) bereitgestellt wird.

9. Motorrad (1) nach einem der vorhergehenden Ansprüche, wobei eine Betätigung des Betätigungselements (42) dafür angeordnet ist, unwirksam zu sein, wenn eine Hauptenergieversorgung eingeschaltet ist.

10. Motorrad (1) nach einem der vorhergehenden Ansprüche, wobei eine Betätigung des Betätigungselements (42) dafür angeordnet ist, wirksam zu sein, wenn die Hauptenergieversorgung ausgeschaltet ist.

11. Motorrad (1) nach einem der vorhergehenden Ansprüche, wobei der Aufbewahrungsteil in einer Vielzahl parallel in Fahrzeugbreitenrichtung bereitgestellt wird, während ein oberes Ende des Deckels (32) in der Nachbarschaft eines unteren Endes des sich neigenden Wandteils (27c) bereitgestellt wird.

12. Motorrad (1) nach einem der vorhergehenden Ansprüche, das ferner einen Hauptschalter (37) zum Einschalten der Hauptenergieversorgung umfasst, wobei der Hauptschalter (37) in dem sich neigenden Wandteil (27c) bereitgestellt wird.

13. Motorrad (1) nach Anspruch 12, wobei der Lenkgriff (5) von einem sperrenden Zustand zu einem entsperrenden Zustand gewechselt wird, wenn der Hauptschalter (37) eingeschaltet wird.

14. Motorrad (1) nach Anspruch 12 oder 13, wobei der Hauptschalter (37) auf einer Fahrzeugmittellinie L bereitgestellt wird, die sich in der Vor-und-Rückwärts-Richtung des Fahrzeugs erstreckt.

15. Motorrad (1) nach Anspruch 1, wobei
die Fußraste einen niedrigen Fußrastenteil umfasst,
das Motorrad eine Frontverkleidung (26) umfasst, die vor dem Steuerrohr (3) bereitgestellt wird,
der Beinschutz (27) so angeordnet ist, dass er eine vordere Seite der Fußraste abdeckt,
der Aufbewahrungsteil zwischen der Frontverkleidung (26) und dem Beinschutz (27) bereitgestellt wird,
der Deckel (32) so geformt ist, dass er zu dem Aufbewahrungsteil des Beinschutzes (27) zeigt, um den Aufbewahrungsteil abzudecken, und
wobei sich der sich neigende Wandteil (27c) in einem kleineren Winkel mit einer horizontalen Ebene neigt als die Nachbarschaft des Deckels (32), so dass der vordere Teil ansteigen würde.

## Revendications

1. Motocycle (1), comprenant :
un tube de tête (3) ;
une poignée de direction (5) capable de tourner par rapport au tube de tête (3) ;
un repose-pieds agencé sur un côté arrière du tube de tête (3) ;
une partie de stockage, comportant une ouverture et un couvercle (32) adapté pour ouvrir et fermer sélectivement ladite ouverture ;
un protège-jambes (27) agencé sur un côté arrière du tube de tête (3), dans lequel le protège-jambes (27) comporte une partie de paroi inclinée (27c) agencée au-dessus du couvercle (32) et inclinée de sa partie arrière au voisinage du couvercle (32) vers sa partie avant ; et
un mécanisme de verrouillage (41) adapté pour verrouiller et déverrouiller sélectivement la rotation de la poignée de direction (5) par l'activation d'un élément de manoeuvre (42), dans lequel l'élément de manoeuvre (42) est agencé dans la partie de paroi inclinée (27c).

2. Motocycle (1) selon la revendication 1, comprenant en outre un couvercle avant (26) agencé en face du tube de tête (3), la partie de stockage étant agencée entre le couvercle avant (26) et le protège-jambes (27).

3. Motocycle (1) selon les revendications 1 ou 2, dans lequel la partie de paroi inclinée (27c) est inclinée à un angle par rapport à un plan horizontal inférieur à celui formé au voisinage du couvercle (32).

4. Motocycle (1) selon l'une quelconque des revendications précédentes, dans lequel l'élément de manoeuvre (42) comprend un bouton mobile agencé dans la partie de paroi inclinée (27c), la configuration et l'aspect du bouton étant différents selon que la poignée de direction (5) est verrouillée ou déverrouillée.

5. Motocycle (1) selon la revendication 4, dans lequel le bouton est adapté pour être poussé pour établir un état de verrouillage.

6. Motocycle (1) selon les revendications 4 ou 5, dans lequel le bouton déborde davantage de la partie de paroi inclinée (27c) dans l'état non verrouillé que dans l'état verrouillé.

7. Motocycle (1) selon l'une quelconque des revendications précédentes, dans lequel l'élément de manoeuvre (42) est agencé sur un côté par rapport à la ligne médiane du véhicule (L) s'étendant dans une direction allant vers l'arrière et vers l'avant du véhicule (1).

8. Motocycle (1) selon l'une quelconque des revendications précédentes, dans lequel l'élément de manoeuvre (42) est agencé au-dessous de la poignée de direction (5).

9. Motocycle (1) selon l'une quelconque des revendications précédentes, dans lequel le fonctionnement de l'élément de manoeuvre (42) est conçu de sorte à être inefficace lorsqu'une alimentation centrale est branchée.

10. Motocycle (1) selon l'une quelconque des revendications précédentes, dans lequel le fonctionnement de l'élément de manoeuvre (42) est conçu de sorte à être efficace lorsque l'alimentation centrale est débranchée.

11. Motocycle (1) selon l'une quelconque des revendications précédentes, dans lequel la partie de stockage est fournie en plusieurs nombres, en parallèle dans une direction de la largeur du véhicule, une extrémité supérieure du couvercle (32) étant agencée au voisinage d'une extrémité inférieure de la partie de paroi inclinée (27c).

12. Motocycle (1) selon l'une quelconque des revendications précédentes, comprenant en outre un interrupteur central (37) pour brancher l'alimentation centrale, l'interrupteur principal (37) étant agencé dans la partie de paroi inclinée (27c).

13. Motocycle (1) selon la revendication 12, dans lequel la poignée de direction (5) passe d'un état verrouillé à un état déverrouillé lorsque l'interrupteur principal (37) est branché.

14. Motocycle (1) selon les revendications 12 ou 13, dans lequel l'interrupteur principal (37) est agencé sur une ligne médiane du véhicule (L) s'étendant dans la direction allant vers l'arrière et vers l'avant du véhicule.

15. Motocycle (1) selon la revendication 1, dans lequel :
le repose-pieds comprend une partie de repose-pieds basse ;
le motocycle comprend un couvercle avant (26) agencé en face du tube de tête (3) ;
le protège-jambes (27) est agencé de sorte à recouvrir un côté avant du repose-pieds ;
la partie de stockage est agencée entre le couvercle avant (26) et le protège-jambes (27) ;
le couvercle (32) est formé de sorte à faire face à la partie de stockage du protège-jambes (27) pour recouvrir la partie de stockage ; et
dans lequel la partie de paroi inclinée (27c) est inclinée à un angle par rapport à une surface horizontale inférieur à celui formé au voisinage du couvercle (32), de sorte que la partie avant serait soulevée.
